# EUROPÄISCHE PATENTSCHRIFT

(11) **EP 4 041 663 B1**
(45) Veröffentlichungstag und Bekanntmachung des Hinweises auf die Patenterteilung: **03.12.2025**
(21) Anmeldenummer: 20780166.3
(22) Anmeldetag: 23.09.2020
(51) Int. Cl.: B65G 47/88

(54) **TRANSPORTVORRICHTUNG UND TRANSPORTVERFAHREN FÜR BEHÄLTER**
TRANSPORT APPARATUS AND METHOD FOR TRANSPORTING CONTAINERS
APPAREIL ET PROCÉDÉ DE TRANSPORT POUR LE TRANSPORT DE CONTENEURS

(30) Priorität: 10.10.2019 DE 102019127262
(43) Veröffentlichungstag der Anmeldung: 17.08.2022
(73) Patentinhaber: Krones AG, 93073 Neutraubling (DE)
(72) Erfinder: HANSEN, Denny, 93073 Neutraubling (DE)
(74) Vertreter: Grünecker Patent- und Rechtsanwälte PartG mbB
(86) Internationale Anmeldenummer: PCT/EP2020/076592
(87) Internationale Veröffentlichungsnummer: WO 2021/069215

(56) Entgegenhaltungen:
- DE-A1- 102016 103 541
- JP-A- 2005 350 184
- JP-A- 2017 128 415
- FLINN E D: "NASA FLEXES ITS ARTIFICIAL MUSCLES", AEROSPACE AMERICA, AMERICAN INSTITUTE OF AERONAUTICS & ASTRONAUTICS. NEW YORK, US, vol. 37, no. 8, 1 August 1999 (1999-08-01), pages 22/23, XP000835331, ISSN: 0740-722X

## Beschreibung

Die Erfindung betrifft eine Transportvorrichtung und ein Transportverfahren für Behälter mit den Merkmalen des Oberbegriffs von Anspruch 1 bzw. 10.

Üblicherweise werden Transportvorrichtungen für Behälter in der Getränkeindustrie dazu eingesetzt, Behälter zwischen den Behandlungsmaschinen zu transportieren und dabei für die weitere Behandlung geeignet zu führen, beispielsweise für eine Reinigungsmaschine oder einen Verpacker. Eine derartige Transportvorrichtung umfasst einen Transporteur, um die Behälter als Behälterstrom zu transportieren und wenigstens ein dem Transporteur zugeordnetes Führungselement, um den Behälterstrom in einer Gasse zu führen. Denkbar sind hier auch mehrere Gassen nebeneinander.

Des Weiteren ist es bei verschiedenartigen Anwendungsfällen notwendig, die Gasse zu sperren, beispielsweise um die Behälter für den Verpacker zu gruppieren oder um sie für das Umschalten einer nachfolgenden Weiche temporär aufzustauen. Dazu umfasst die Gassensperreinrichtung wenigstens ein steuerbares Sperrelement, das während des Betriebs des Transporteurs zwischen einer Normalstellung zum freien Transport und einer Sperrstellung zum Sperren des Transports in der Gasse verstellbar ausgebildet ist.

Beispielsweise offenbart die DE 202 00 794 U1 eine Vorrichtung zum Verteilen von Behältern von einem einreihigen Zuförderer auf einen mehrreihigen Abförderer mit einer Weichenanordnung. Im einreihigen Transportbereich vor dem mehrreihigen Abförderer ist mindestens ein Bremselement für die Behälter angeordnet. Das Bremselement umfasst einen horizontal und quer zur Transportrichtung angeordneten, doppelt wirkenden Pneumatikzylinder sowie einen an dessen Kolbenstange befestigten Bremsschuh.

Die DE 10 2016 103 541 A1, welche die Merkmale des Oberbegriffs der Ansprüche 1 und 10 offenbart, offenbart eine Vorrichtung zum Vereinzeln von Behältern, die auf einem Transporteur in Förderrichtung bewegt werden. Zum Vereinzeln weist die Vorrichtung einen Körper auf, der mit einer Pumpe und einem fluiden Medium gedehnt wird.

Nachteilig dabei ist, dass derartige Elemente mit pneumatischer oder hydraulischer Arbeitsweise eine gewisse Schaltzeit benötigen, bis sie den Transport vollständig sperren. Dadurch kann die Maschinenleistung nicht beliebig erhöht werden. Zudem erfordern sie einen gewissen Bauraum, der bei einer derartigen Transportvorrichtung mit einer oder mehreren Gassen oftmals schwer zu realisieren ist.

Aufgabe der vorliegenden Erfindung ist es daher, eine Transportvorrichtung und ein Transportverfahren für Behälter bereitzustellen, bei der eine höhere Maschinenleistung möglich ist und bei der für die Gassensperreinrichtung ein geringerer Bauraum notwendig ist.

Zur Lösung der Aufgabenstellung stellt Erfindung eine Transportvorrichtung mit den Merkmalen des Anspruchs 1 bereit. Vorteilhafte Ausführungsformen der Erfindung sind in den Unteransprüchen genannt.

Dadurch, dass das wenigstens eine steuerbare Sperrelement zur Verstellung zwischen der Normalstellung und der Sperrstellung ein elektrisches Muskelelement umfasst, wird ein elektrisches Steuersignal unmittelbar in eine mechanische Bewegung des wenigstens einen steuerbaren Sperrelements umgesetzt. Folglich erfordert das wenigstens eine steuerbare Sperrelement besonders wenig Teile. Dadurch kann das steuerbare Sperrelement besonders kompakt aufgebaut werden. Zudem arbeiten elektrische Muskelelemente durch die direkte Umsetzung des elektrischen Steuersignals in die mechanische Bewegung schneller als pneumatische oder hydraulische Aktuatoren. Folglich können kürzere Schaltzeiten des wenigstens einen steuerbaren Sperrelements realisiert werden, wodurch die Maschinenleistung steigt.

Die Transportvorrichtung kann in einer Getränkeverarbeitungsanlage angeordnet sein. Die Transportvorrichtung kann einer Behälterbehandlungsmaschine zugeordnet sein, beispielsweise einer Behälterherstellungsmaschine, einer Streckblasmaschine, einer Reinigungsmaschine, einer Sortiermaschine, einer Leerflascheninspektionsmaschine, einer Vollflascheninspektionsmaschine, einem Füller, einem Verschließer und/oder einem Verpacker. Vorzugsweise kann die Transportvorrichtung der Reinigungsmaschine zum Reinigen der Behälter und/oder dem Verpacker zum Verpacken mehrerer Behälter in ein Gebinde zugeordnet sein. Dabei können die Behälter in der Gasse oder auch in mehreren derartigen Gassen mit der Gassensperreinrichtung besonders gut vereinzelt werden. Vorzugsweise kann die Transportvorrichtung zwischen zwei der vorgenannten Behälterbehandlungsmaschinen angeordnet sein. Generell ist eine Anordnung der Transportvorrichtung zwischen allen bekannten Teilen einer Getränkeverarbeitungsanlage denkbar.

Die Behälter können dazu vorgesehen sein, Getränke, Nahrungsmittel, Hygieneartikel, Pasten, chemische, biologische und/oder pharmazeutische Produkte aufzunehmen. Anders ausgedrückt können die Behälter dazu vorgesehen sein, ein flüssiges Produkt aufzunehmen. Die Behälter können Kunststoffflaschen, Glasflaschen, Dosen und/oder Tuben sein. Bei Behältern aus Kunststoff kann es sich im Speziellen um PET-, PEN-, HD-PE- oder PP-Behälter bzw. Flaschen handeln.

Ebenso kann es sich um biologisch abbaubare Behälter oder Flaschen handeln, deren Hauptbestandteile aus nachwachsenden Rohstoffen wie zum Beispiel Zuckerrohr, Weizen oder Mais bestehen. Die Behälter können jeweils einen Verschlusskopf für einen Verschluss umfassen.

Bei dem Transporteur kann es sich um einen Lineartransporteur handeln. Der Transporteur umfasst zum Fördern der Behälter wenigstens ein Förderband, insbesondere eine Gliederbandkette oder ein flexibles Kunststoffband. Dadurch können die Behälter stehend transportiert werden. Zudem kann der Transporteur einen Antrieb und/oder Umlenkrollen umfassen, um das Förderband anzutreiben und/oder zu führen. Denkbar sind auch mehrere zueinander parallel angeordnete Förderbänder, um die Behälter in mehreren Gassen zu transportieren.

Das wenigstens eine, zugeordneten Führungselement kann als Gassenblech und/oder als Flaschenführung ausgebildet sein. Denkbar ist, dass dem Transporteur mehrere Führungselemente zugeordnet sind. Vorzugsweise können dem Transporteur mehrere Führungselemente zugeordnet sein, um den Behälterstrom in mehreren Gassen zu führen. Die Gassen können dazu vorzugsweise parallel zueinander angeordnet sein. Dadurch können die Behälter in mehreren parallelen Behälterreihen einer nachfolgenden Behälterbehandlungsmaschine zugeführt werden, beispielsweise einer Verpackungsmaschine.

Mit der "Gassensperreinrichtung" kann hier gemeint sein, dass das wenigstens eine steuerbare Sperrelement in der Sperrstellung wenigstens teilweise in die Gasse hineinragt, so dass der Behälterstrom in der Gasse mechanisch blockiert wird. Denkbar ist, dass der Transporteur in der Sperrstellung weiterhin aktiv bleibt, beispielsweise wobei die Behälter auf dem Transporteur rutschen. Bei mehreren Gassen können jeder Gasse jeweils eine derartige Gassensperreinrichtung zugeordnet sein. Mit dem "steuerbarem Sperrelement" kann hier gemeint sein, dass das Sperrelement mittels einer Steuerungseinheit durch ein elektrisches Steuersignal derart gesteuert werden kann, dass es sich zwischen der Normalstellung und der Sperrstellung verstellt. Denkbar ist, dass das wenigstens eine steuerbare Sperrelement über eine oder mehrere elektrische Verbindungsleitungen mit der Steuerungseinheit verbunden ist, um das elektrische Steuersignal zu übertragen.

Die Steuerungseinheit kann eine CPU, einen Speicher, eine Ein- und/oder Ausgabeeinheit, eine Anzeigeeinheit und/oder eine Eingabeeinheit umfassen. Beispielsweise kann es sich bei der Steuerungseinheit um eine Maschinensteuerung handeln. Die Steuerungseinheit kann ein Softwareprodukt umfassen, mit der die Gassensperreinrichtung und/oder der Transporteur auf Basis eines Behandlungsablaufs für die Behälter gesteuert werden.

Mit dem "elektrischem Muskelelement" kann hier ein künstliches elektrisches Muskelelement gemeint sein. Vorzugsweise kann das elektrische Muskelelement ein oder mehrere Materialien, insbesondere ein Kunststoffmaterial umfassen, das bzw. die durch ein elektrisches Steuersignal vor formbar sind. Das Kunststoffmaterial kann vorzugsweise ein Polymermaterial umfassen.

Das wenigstens eine steuerbare Sperrelement kann als deformierbares Kissenelement mit dem elektrischen Muskelelement ausgebildet sein. Dadurch ist der Aufbau des wenigstens einen steuerbaren Sperrelements besonders einfach. Zudem kann das deformierbare Kissenelement besonders einfach seitlich an der Gasse im Bereich des wenigstens einen Führungselement angeordnet werden und benötigt besonders wenig Platz. Mit dem "deformierbaren Kissenelement" kann hier ein Pad gemeint sein. Vorzugsweise kann das deformierbare Kissenelement ein Gummi- oder gelartiges Material umfassen, in dem das elektrische Muskelelement eingebettet ist. Das deformierbare Kissenelement kann eine Grundfläche in einem Bereich von 2 X 2 cm bis 15 X 15 cm aufweisen, und wobei die Dicke in einem Bereich von 1 mm in der Normalstellung und ~2 cm bei der Sperrstellung liegt. In der Sperrstellung wird der Behälter durch das Kissenelement fixiert.

Das elektrische Muskelelement kann ein elektroaktives Polymerelement umfassen. Dadurch ist das elektrische Muskelelement besonders einfach aufgebaut. Beispielsweise kann das elektroaktive Polymerelement als dielektrisches Elastomerelement, insbesondere als planares dielektrisches Elastomerelement ausgebildet sein. Mit "planar" kann hier gemeint sein, dass das elektroaktive Polymerelement eben und/oder scheibenartig ausgebildet ist. Denkbar ist beispielsweise, dass das elektroaktive Polymerelement zwei flexible Elektroden mit dem dazwischenliegenden, dielektrischen Elastomerelement umfasst. Dadurch wird das Steuersignal besonders einfach in die mechanische Bewegung des wenigstens einen steuerbaren Sperrelements umgesetzt. Denkbar sind jedoch auch andere geeignete Arbeitsweisen des elektroaktiven Polymerelements. Weitere Anwendungsbeispiele sind Pumpen, Schalter und Ventile bei denen elektroaktive Polymerelemente verwendet werden.

Das elektrische Muskelelement kann ein Federelement zum Aufbringen einer Rückstellkraft auf das elektroaktive Polymerelement und/oder zur Übersetzung der Verformung des elektrischen Muskelelements in eine Hubbewegung umfassen. Dadurch kann das steuerbare Sperrelement besonders schnell aus der Sperrstellung in die Normalstellung gebracht werden, so dass ein noch höherer Maschinendurchsatz erreicht werden kann. Ebenso ist denkbar, dass das Federelement über das elektrische Muskelelement bogenartig verformt wird, so dass dadurch die Verformung des elektrischen Muskelelements in die Hubbewegung erfolgt. Beispielsweise kann das Federelement als Federblech ausgebildet sein.

Denkbar ist, dass das elektroaktive Polymerelement und das Federelement sandwichartig in dem deformierbaren Kissenelement angeordnet sind. Dadurch ist das deformierbare Kissenelement besonders einfach herzustellen. Beispielsweise können das elektroaktive Polymerelement und das Federelement in ein elastisches Material sandwichartig eingebettet sein, insbesondere wobei das elastische Material teilweise oder ganz zwischen dem elektroaktive Polymerelement und dem Federelement angeordnet ist. Demnach kann sich das elektroaktive Polymerelement in wenigstens einer Längsrichtung zusammenziehen, so dass das Federelement in der Sperrstellung bogenartig deformiert wird. Umgekehrt kann sich das elektroaktive Polymerelement in der Normalstellung ausdehnen, so dass das Federelement entlastet wird und sich weniger krümmt als in der Sperrstellung.

Das wenigstens eine steuerbare Sperrelement kann derart seitlich an der Gasse angeordnet sein, dass es quer zu einer Transportrichtung des Transporteurs verstellbar ist, um in der Sperrstellung in den Behälterstrom hineinzuragen. Dadurch wird für das steuerbare Sperrelement kein Bauraum über der Gasse benötigt. Beispielsweise kann das wenigstens eine steuerbare Sperrelement an einem Gassenblech oder einem Aufsatzstück für das Gassenblech integriert sein. Insbesondere kann das wenigstens eine steuerbare Sperrelement nur genau ein einziges steuerbares Sperrelement für die Gasse umfassen.

Denkbar ist auch, dass das wenigstens eine steuerbare Sperrelement als zwei steuerbare Sperrelemente ausgebildet ist, die derart seitlich an der Gasse angeordnet sind, dass sie quer zu einer Transportrichtung des Transporteurs entgegengesetzt zueinander verstellbar sind, um in der Sperrstellung in den Behälterstrom hineinzuragen. Dadurch können die beiden steuerbaren Sperrelemente quer zur Transportrichtung besonders flach ausgebildet werden, da sie jeweils nur die Hälfte der Verstellbewegung mitmachen müssen.

Darüber hinaus stellt die Erfindung zur Lösung der Aufgabenstellung ein Transportverfahren für Behälter mit Merkmal des Anspruchs 10 bereit. Vorteilhafte Ausführungsformen des Transportverfahrens sind in den Unteransprüchen genannt.

Dadurch, dass das wenigstens eine steuerbare Sperrelement zwischen der Normalstellung und der Sperrstellung mit dem elektrischen Muskelelement verstellt wird, wird ein elektrisches Steuersignal unmittelbar in eine mechanische Bewegung des wenigstens einen steuerbaren Sperrelements umgesetzt. Folglich erfordert die Verstellbewegung besonders wenig Teile. Dadurch kann das steuerbare Sperrelement besonders kompakt aufgebaut werden. Zudem arbeiten elektrische Muskelelemente durch die direkte Umsetzung des elektrischen Steuersignals in die mechanische Bewegung schneller als pneumatische oder hydraulische Aktuatoren. Folglich können kürzere Schaltzeiten des wenigstens einen steuerbaren Sperrelements realisiert werden, wodurch die Maschinenleistung steigt.

Das Transportverfahren kann mit der zuvor beschriebenen Transportvorrichtung für Behälter, insbesondere nach einem der Ansprüche 1-9 durchgeführt werden. Das Transportverfahren kann die zuvor in Bezug auf die Transportvorrichtung beschriebenen Merkmale, insbesondere nach einem der Ansprüche 1 bis 9 sinngemäß umfassen.

Beim Verstellen des elektrischen Muskelelements kann ein elektroaktives Polymerelement aktiviert werden. Dadurch kann ein Steuersignal einer Steuerungseinheit besonders einfach in eine mechanische Bewegung des wenigstens einen steuerbaren Sperrelement umgesetzt werden. Denkbar ist, dass das elektroaktive Polymerelement als dielektrisches Elastomerelement ausgebildet ist, wobei elektrostatische Kräfte zwischen zwei flexiblen Elektroden über das dielektrische Elastomerelement in eine mechanische Bewegung umgesetzt werden.

Das wenigstens eine steuerbare Sperrelement kann quer zu einer Transportrichtung verstellt werden, so dass es in der Sperrstellung in den Behälterstrom hineinragt. Dadurch werden die Behälter am Weitertransport mechanisch gehindert. Zudem kann das wenigstens eine steuerbare Sperrelement quer zu einer Transportrichtung derart verstellt werden, dass es in der Normalstellung aus dem Behälterstrom zurückgezogen wird. Dadurch wird der Behälterstrom zum weiteren Transport freigegeben.

Denkbar ist auch, dass zwei steuerbare Sperrelemente quer zu einer Transportrichtung des Transporteurs entgegengesetzt zueinander verstellt werden, so dass sie in der Sperrstellung in den Behälterstrom hineinragen. Dadurch müssen sich die beiden steuerbare Sperrelemente jeweils nur um die Hälfte bewegen, um den Behälterstrom zu sperren. Umgekehrt können die beiden steuerbare Sperrelemente in der Normalstellung zurückgezogen werden, so dass sie den Behälterstrom wieder freigeben.

Weitere Merkmale und Vorteile der Erfindung werden nachfolgend anhand der in den Figuren dargestellten Ausführungsbeispiele näher erläutert. Dabei zeigt:
- Figur 1: einen Teilbereich einer Getränkeverarbeitungsanlage mit einem erfindungsgemäßen Ausführungsbeispiel einer Transportvorrichtung und mit einer nachfolgenden Behälterbehandlungsmaschine;
- Figuren 2A - 2B: zwei Detailansichten einer Gasse aus der Figur 1 mit der Gassensperreinrichtung in der Sperrstellung bzw. in der Normalstellung; und
- Figuren 3A - 3B: eine Detailansicht eines steuerbaren Sperrelements in der Sperrstellung bzw. in der Normalstellung.

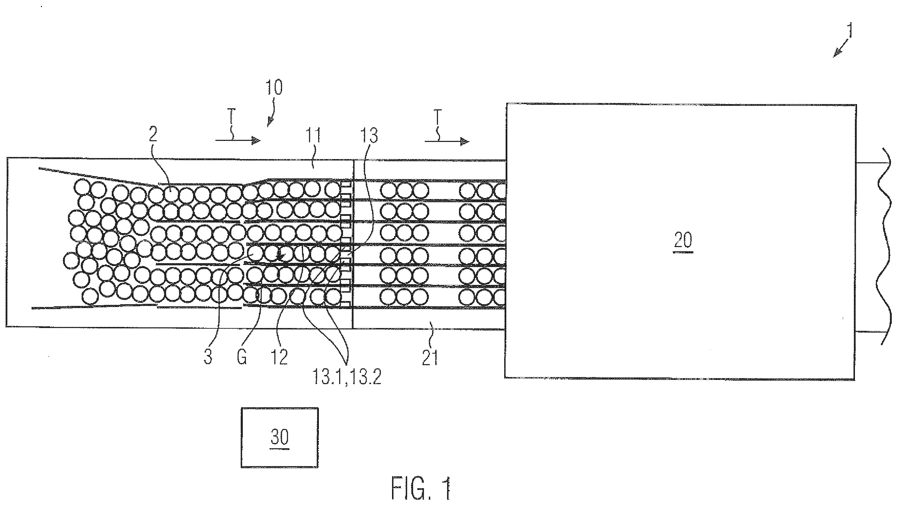

In der Figur 1 ist ein Teilbereich einer Getränkeverarbeitungsanlage 1 mit einem erfindungsgemäßen Ausführungsbeispiel einer Transportvorrichtung 10 für Behälter 2 und mit einer Behälterbehandlungsmaschine 20 zu sehen. Die Behälterbehandlungsmaschine 20 ist hier lediglich beispielhaft als Waschmaschine ausgeführt, um die Behälter 2 zu reinigen. Denkbar ist jedoch auch jede beliebige andere Behälterbehandlungsmaschine, bei der eine Transportvorrichtung in Verbindung mit einer Gassensperreinrichtung einsetzbar ist, wie z.B. eine Behälterinspektionsmaschine, eine Verpackungsmaschine, ein (linear)Füller oder ein Behälterpuffersystem.

Zu sehen ist, dass die Transportvorrichtung 10 einen Transporteur 11 umfasst, mit dem die Behälter 2 zunächst ungeordnet transportiert und dann in mehreren parallelen Gassen G vereinzelt werden. In diesem Ausführungsbeispiel sind sechs parallele Gassen G gezeigt, es kann sich jedoch auch um eine einzelne Gassen G oder eine beliebige Anzahl von Gassen handeln. Der Transporteur 11 ist hier mit einem Förderband ausgebildet, auf dem die Behälter 2 stehend als Behälterstrom 3 transportiert werden. Der Behälterstrom 3 wird durch dem Transporteur 11 zugeordnete Führungselemente 12 zunächst auf drei und dann auf sechs Gassen G aufgeteilt, sodass die Behälter in sechs parallelen Behälterreihen transportiert werden. In jeder der Gassen G werden die Behälter 2 also nur sequentiell hintereinander stehend transportiert. Zu sehen ist weiter, dass jeder Gasse G eine Gassensperreinrichtung 13 mit zwei steuerbaren Sperrelementen 13.1, 13.2 zugeordnet ist. Dadurch kann während des Betriebs des Transporteurs 11 zwischen einer Normalstellung zum freien Transport und einer Sperrstellung zum Sperren des Transports in der Gasse G umgeschaltet werden. Dazu sind die beiden steuerbaren Sperrelemente 13.1, 13.2 seitlich an der Gasse G angeordnet, so dass sie quer zu der Transportrichtung T des Transporteurs 11 entgegengesetzt zueinander verstellbar sind, um in der Sperrstellung in den Behälterstrom 3 hineinzuragen.

In der Sperrstellung werden die Behälter 2 so in den Gassen G unmittelbar hintereinanderliegend aufgestaut. Der Transport kann dann mit der Gassensperreinrichtung 13 intervallweise freigegeben werden, so dass die Behälter 2 vorgruppiert an den nachfolgenden Transporteur 21 der Behälterbehandlungsmaschine 20 übergeben werden. Zu sehen ist in der Figur 1 lediglich beispielhaft, dass jeweils drei der Behälter 2 hintereinander auf dem Transporteur 21 pro Gasse transportiert werden, so dass sie besonders einfach bei dem Waschvorgang mit der Behälterbehandlungsmaschine 20 verarbeitet werden können.

Zu sehen ist weiter die Steuerungseinheit 30, mit der die Transportvorrichtung 10 gesteuert wird. Sie umfasst eine CPU, eine Speichereinheit, Ein- und Ausgabeschnittstelle sowie eine Anzeigeeinheit und eine Eingabeeinheit. Zudem umfasst die Steuerungseinheit 30 eine Software, mit der die Gassensperreinrichtung 13 intervallweise in die Normalstellung bzw. in die Sperrstellung verstellt werden kann.

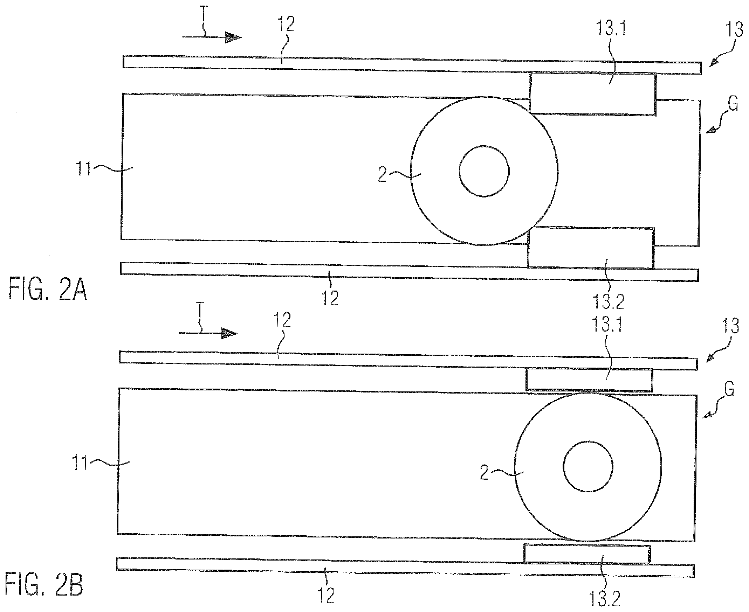

In den Figuren 2A und 2B sind zwei Detailansichten einer Gasse G aus der Figur 1 mit der Gassensperreinrichtung 13 in der Sperrstellung bzw. in der Normalstellung genauer dargestellt.

In der Figur 2A ist der mit einem Förderband ausgebildete Transporteur 11 zu sehen, auf dem die Behälter 2 stehend transportiert werden. Zu sehen ist lediglich ein einzelner Behälter 2, um die Funktion der Gassensperreinrichtung 13 zu verdeutlichen. Es versteht sich, dass auf dem Transporteur 11 zudem die in der Figur 1 weiter dargestellten Behälter 2 als Behälterstrom in der Transportrichtung T transportiert werden.

Des Weiteren ist zu sehen, dass dem Transporteur 11 die Führungselemente 12 zugeordnet sind, die beispielsweise als Gassenbleche ausgebildet ist. Dadurch werden die Behälter 2 seitlich als Behälterstrom geführt.

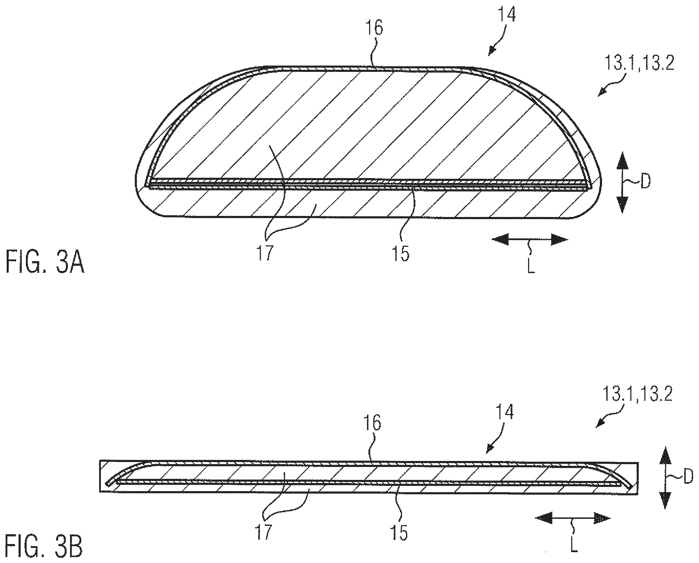

Ferner sind seitlich an der Gasse G die beiden steuerbaren Sperrelemente 13.1, 13.2 an den Führungselementen 12 angeordnet, so dass sie quer zu der Transportrichtung T des Transporteurs 11 entgegengesetzt zueinander verstellbar sind. Zu sehen ist in der Figur 2A, dass die zwei steuerbaren Sperrelemente durch ein nachfolgend in den Figuren 3A - 3B genauer beschriebenes, elektrisches Muskelelement derart verstellt sind, dass sie in der Sperrstellung in den Behälterstrom mechanisch hineinragen und dadurch blockieren.

Entsprechend umgekehrt sind sie in der Figur 2B derart verstellt, dass sie in der Normalstellung nicht mehr in den Behälterstrom 3 hineinragen und ihn dadurch für den Transport freigegeben.

Denkbar ist alternativ, dass die Gassensperreinrichtung 13 pro Gasse G genau ein einziges derartig steuerbares Sperrelement 13.1 umfasst, um in der Sperrstellung in den Behälterstrom 3 hineinzuragen. Dadurch erfordert die Gassensperreinrichtung 13 weniger Komponenten.

In den Figuren 3A - 3B ist eines der steuerbaren Sperrelemente 13.1, 13.2 in einer Schnittansicht von oben genauer dargestellt. Die beiden steuerbaren Sperrelemente 13.1, 13.2 aus den Figuren 1 - 2B sind als gleichartig gemäß den Figuren 3A - 3B aufgebaut.

Zu sehen ist, dass das steuerbare Sperrelement 13.1, 13.2 als deformierbares Kissenelement mit dem elektrischen Muskelelement 14 ausgebildet ist. Das elektrische Muskelelement 14 umfasst das elektroaktive Polymerelement 15 und das Federelement 16, die sandwichartig in dem deformierbaren Kissenelement angeordnet und dazu in das elastische Material 17 eingebettet sind.

Das elektroaktive Polymerelement 15 ist beispielsweise als planares dielektrisches Elastomerelement ausgebildet. Im Detail besteht das elektroaktive Polymerelement 15 aus zwei flexiblen Elektroden, die planar zueinander angeordnet sind und zwischen denen sich das dielektrische Elastomerelement befindet.

Wird, wie in der Figur 3A dargestellt, an beiden Elektroden ein elektrisches Potenzial mit gleichem Vorzeichen angelegt, so stoßen sich die Elektroden voneinander ab. Dadurch wird das dielektrische Elastomer zwischen den beiden flexiblen Elektroden in der Richtung D auseinandergezogen und wird so dicker. Um das Volumen auszugleichen, zieht sich dafür das dielektrische Elastomerelement in der Längsrichtung L zusammen, wodurch das Federelement 16 bogenartig gespannt und das elastische Material 17 entsprechend verformt wird. Das Federelement 16 ist hier beispielsweise als Federblech ausgebildet.

Durch das bogenartige Spannen des Federelements 16 wird also die Längsbewegung des elektroaktiven Poylmerelements 15 in eine besonders große Verformung des deformierbaren Kissenelements in der Dicke übersetzt, so dass es in der Sperrstellung besonders weit in den Behälterstrom 3 hineinragt.

Entsprechend ist das steuerbare Sperrelement 13.1, 13.2 in der Figur 3B in der Normalstellung gezeigt, bei der an den flexiblen Elektroden des elektroaktiven Polymerelements 15 keine elektrischen Potentiale anliegen. Folglich wird das elektrische Muskelelement 14 durch die Rückstellkraft des Federelement 16 wieder gestreckt und so in eine besonders flache Stellung gebracht. Dadurch ragt es dann nicht mehr in den Behälterstrom 3 hinein.

Denkbar ist alternativ, dass an den Elektroden des elektroaktiven Polymerelements 15 in der Sperrstellung entsprechend Figur 3A kein elektrisches Potential anliegt. Demnach würde dann in der Normalstellung nach der Figur 3B an einer der Elektroden ein negatives elektrisches Potential und an der anderen Elektrode ein positives elektrisches Potential anliegen. Dadurch ziehen sich die beiden flexiblen Elektroden gegenseitig an, sodass das dazwischenliegende dielektrische Elastomerelement gegenüber der Sperrstellung zusammengepresst und in der Längsrichtung L gestreckt wird. Folglich wird das Federelement 16 weniger bogenartig gespannt und das steuerbare Sperrelement 13.1, 13.2 ragt weniger weit in den Behälterstrom 3 hinein.

Dadurch, dass das wenigstens eine steuerbare Sperrelement 13.1, 13.2 zur Verstellung zwischen der Normalstellung und der Sperrstellung ein elektrisches Muskelelement 14 umfasst, wird ein elektrisches Steuersignal unmittelbar in eine mechanische Bewegung des wenigstens einen steuerbaren Sperrelements 13.1, 13.2 umgesetzt. Folglich erfordert das wenigstens eine steuerbare Sperrelement 13.1, 13.2 besonders wenig Teile. Dadurch kann das steuerbare Sperrelement 13.1, 13.2 besonders kompakt aufgebaut werden. Zudem arbeiten elektrische Muskelelemente 14 durch die direkte Umsetzung des elektrischen Steuersignals in die mechanische Bewegung schneller als pneumatische oder hydraulische Aktuatoren. Folglich können kürzere Schaltzeiten des wenigstens einen steuerbaren Sperrelements 13.1, 13.2 realisiert werden, wodurch die Maschinenleistung steigt.

Es versteht sich, dass in den zuvor beschriebenen Ausführungsbeispielen genannte Merkmale nicht auf diese Merkmalskombination beschränkt sind, sondern auch einzelnen oder in beliebigen anderen Kombinationen möglich sind.

## Patentansprüche

1. Transportvorrichtung (10) für Behälter (2), mit
- einem Transporteur (11) zum stehenden Transport der Behälter (2) als Behälterstrom (3),
- wenigstens einem dem Transporteur (11) zugeordneten Führungselement (12) zur Führung des Behälterstroms (3) in einer Gasse (G), und
- mit einer Gassensperreinrichtung (13), die wenigstens ein steuerbares Sperrelement (13.1, 13.2) umfasst, das während des Betriebs des Transporteurs (11) zwischen einer Normalstellung zum freien Transport und einer Sperrstellung zum Sperren des Transports in der Gasse (G) verstellbar ausgebildet ist,
wobei der Transporteur zum Fördern der Behälter wenigstens ein Förderband umfasst,
**dadurch gekennzeichnet, dass**
das wenigstens eine steuerbare Sperrelement (13.1, 13.2) zur Verstellung zwischen der Normalstellung und der Sperrstellung ein elektrisches Muskelelement (14) umfasst.

2. Transportvorrichtung (10) nach Anspruch 1, wobei das wenigstens eine steuerbare Sperrelement (13.1, 13.2) als deformierbares Kissenelement mit dem elektrischen Muskelelement (14) ausgebildet ist.

3. Transportvorrichtung (10) nach Anspruch 1 oder 2, wobei das elektrische Muskelelement (14) ein elektroaktives Polymerelement (15) umfasst.

4. Transportvorrichtung (10) nach Anspruch 3, wobei das elektroaktive Polymerelement (15) als dielektrisches Elastomerelement, insbesondere als planares dielektrisches Elastomerelement ausgebildet ist.

5. Transportvorrichtung (10) nach Anspruch 3 oder 4, wobei das elektrische Muskelelement (14) ein Federelement (16) zum Aufbringen einer Rückstellkraft auf das elektroaktive Polymerelement (15) und/oder zur Übersetzung der Verformung des elektrischen Muskelelements (14) in eine Hubbewegung umfasst.

6. Transportvorrichtung (10) nach Anspruch 5, wobei das Federelement (16) als Federblech ausgebildet ist.

7. Transportvorrichtung (10) nach Anspruch 2 und einem der Ansprüche 5 - 6, wobei das elektroaktive Polymerelement (15) und das Federelement (16) sandwichartig in dem deformierbaren Kissenelement angeordnet sind.

8. Transportvorrichtung (10) nach einem der vorangegangenen Ansprüche, wobei das wenigstens eine steuerbare Sperrelement (13.1, 13.2) derart seitlich an der Gasse (G) angeordnet ist, dass es quer zu einer Transportrichtung (T) des Transporteurs (11) verstellbar ist, um in der Sperrstellung in den Behälterstrom (3) hineinzuragen.

9. Transportvorrichtung (10) nach einem der Ansprüche 1 - 7, wobei das wenigstens eine steuerbare Sperrelement (13.1, 13.2) als zwei steuerbare Sperrelemente (13.1, 13.2) ausgebildet ist, die derart seitlich an der Gasse (G) angeordnet sind, dass sie quer zu einer Transportrichtung (T) des Transporteurs (11) entgegengesetzt zueinander verstellbar sind, um in der Sperrstellung in den Behälterstrom (3) hineinzuragen.

10. Transportverfahren für Behälter (2), wobei die Behälter (2) mit einem Transporteur (11) als Behälterstrom (3) stehend transportiert werden, wobei der Behälterstrom (3) mit wenigsten einem dem Transporteur (11) zugeordneten Führungselement (12) in einer Gasse (G) geführt wird, wobei der Transport in der Gasse (G) mit wenigstens einem steuerbaren Sperrelement (13.1, 13.2) einer Gassensperreinrichtung (13) wahlweise in einer Normalstellung freigegeben oder in einer Sperrstellung gesperrt wird,
wobei der Transporteur (11) zum Fördern der Behälter wenigstens ein Förderband umfasst und die Behälter mit dem wenigstens einen Förderband gefördert werden,
**dadurch gekennzeichnet, dass**
das wenigstens eine steuerbare Sperrelement (13) zwischen der Normalstellung und der Sperrstellung mit einem elektrischen Muskelelement (14) verstellt wird.

11. Transportverfahren nach Anspruch 10, wobei beim Verstellen des elektrischen Muskelelements (14) ein elektroaktives Polymerelement (15) aktiviert wird.

12. Transportverfahren nach Anspruch 10 oder 11, wobei das wenigstens eine steuerbare Sperrelement (13.1, 13.2) quer zu einer Transportrichtung (T) verstellt wird, so dass es in der Sperrstellung in den Behälterstrom (3) hineinragt.

13. Transportverfahren nach Anspruch 10 oder 11, wobei zwei steuerbare Sperrelemente (13.1, 13.2) quer zu einer Transportrichtung (T) des Transporteurs (11) entgegengesetzt zueinander verstellt werden, so dass sie in der Sperrstellung in den Behälterstrom (3) hineinragen.

## Claims

1. Transport device (10) for containers (2) with
- a conveyor (11) for upright transporting of the containers (2) as a container stream (3),
- at least one guide element (12) assigned to the conveyor (11) for guiding the container stream (3) in a lane (G), and
- with a lane blocking device comprising at least one controllable blocking element (13.1, 13.2) which is designed to be adjustable between a normal position for free transport and a blocking position for blocking the transport in the lane (G) during operation of the conveyor (11),
wherein the conveyor for transporting of the containers comprises at least one conveyor band,
**characterised in that**
the at least one controllable blocking element (13.1, 13.2) comprises an electrical muscle element (14) for adjustment between the normal position and the blocking position.

2. Transport device (10) according to claim 1, wherein the at least one controllable blocking element (13.1, 13.2) is designed as a deformable cushion element with the electrical muscle element (14).

3. Transport device (10) according to claim 1 or 2, wherein the electrical muscle element (14) comprises an electroactive polymer element (15).

4. Transport device (10) according to claim 3, wherein the electroactive polymer element (15) is designed as a dielectric elastomer element, in particular as a planar dielectric elastomer element.

5. Transport device (10) according to claim 3 or 4, wherein the electrical muscle element (14) comprises a spring element (16) for applying a restoring force to the electroactive polymer element (15) and/or for converting the deformation of the electrical muscle element (14) into a lifting movement.

6. Transport device (10) according to claim 5, wherein the spring element (16) is designed as a spring plate.

7. Transport device (10) according to claim 2 and one of claims 5 - 6, wherein the electroactive polymer element (15) and the spring element (16) are sandwiched in the deformable cushion element.

8. Transport device (10) according to one of the preceding claims, wherein the at least one controllable blocking element (13.1, 13.2) is arranged laterally at the lane (G) in such a way that it is adjustable transversely to a transport direction (T) of the conveyor (11) in order to protrude into the container stream (3) in the blocking position.

9. Transport device (10) according to one of claims 1 - 7, wherein the at least one controllable blocking element (13.1, 13.2) is designed as two controllable blocking elements (13.1, 13.2) which are arranged laterally at the lane (G) in such a way that they can be adjusted transversely to a transport direction (T) of the conveyor (11) in opposite directions to one another in order to protrude into the container flow (3) in the blocking position.

10. Transport method for containers (2), wherein the containers (2) are transported upright as a container stream (3) by a conveyor (11), wherein the container stream (3) is guided in a lane (G) by at least one guide element (12) assigned to the conveyor (11), wherein the transport in the lane (G) is selectively released in a normal position or blocked in a blocking position by at least one controllable blocking element (13.1, 13.2) of a lane blocking device (13),
wherein the conveyor (11) for transporting of the containers comprises at least one conveyor band and the containers are transported by the at least one conveyor band,
**characterized in that**
the at least one controllable blocking element (13) is adjusted between the normal position and the blocking position by an electrical muscle element (14).

11. Transport method according to claim 10, wherein an electroactive polymer element (15) is activated when the electrical muscle element (14) is adjusted.

12. Transport method according to claim 10 or 11, wherein the at least one controllable blocking element (13.1, 13.2) is adjusted transversely to a transport direction (T) so that it protrudes into the container stream (3) in the blocking position.

13. Transport device according to claim 10 or 11, wherein two controllable blockingelements (13.1, 13.2) are adjusted transversely to a transport direction (T) of the conveyor (11) in opposite directions to one another, so that they protrude into the container stream (3) in the blocking position.

## Revendications

1. Dispositif de transport (10) pour récipients (2), comportant
- un convoyeur (11) pour le transport des récipients (2) debout sous forme d'un flux de récipients (3),
- au moins un élément de guidage (12) associé au convoyeur (11) pour guider le flux de récipients (3) dans une voie (G), et
- un dispositif de blocage de voie (13) comprenant au moins un élément de blocage contrôlable (13.1, 13.2) qui est conçu de manière réglable pendant le fonctionnement du convoyeur (11) entre une position normale de transport libre et une position de blocage pour bloquer le transport dans la voie (G),
dans lequel le convoyeur comprend au moins une bande transporteuse pour transporter les récipients,
**caractérisé en ce que** ledit au moins un élément de blocage contrôlable (13.1, 13.2) comprend un élément musculaire électrique (14) pour un réglage entre la position normale et la position de blocage.

2. Dispositif de transport (10) selon la revendication 1, dans lequel ledit au moins un élément de blocage contrôlable (13.1, 13.2) est conçu comme un élément de coussin déformable avec l'élément musculaire électrique (14).

3. Dispositif de transport (10) selon la revendication 1 ou 2, dans lequel l'élément musculaire électrique (14) comprend un élément polymère électroactif (15).

4. Dispositif de transport (10) selon la revendication 3, dans lequel l'élément polymère électroactif (15) est conçu comme un élément élastomère diélectrique, en particulier comme un élément élastomère diélectrique plan.

5. Dispositif de transport (10) selon la revendication 3 ou 4, dans lequel l'élément musculaire électrique (14) comprend un élément de ressort (16) pour appliquer une force de rappel à l'élément polymère électroactif (15) et/ou pour convertir la déformation de l'élément musculaire électrique (14) en un mouvement de levage.

6. Dispositif de transport (10) selon la revendication 5, dans lequel l'élément de ressort (16) est conçu comme une plaque de ressort.

7. Dispositif de transport (10) selon la revendication 2 et l'une des revendications 5 et 6, dans lequel l'élément polymère électroactif (15) et l'élément de ressort (16) sont intercalés dans l'élément de coussin déformable.

8. Dispositif de transport (10) selon l'une des revendications précédentes, dans lequel ledit au moins un élément de blocage contrôlable (13.1, 13.2) est agencé latéralement sur la voie (G) de manière à être réglable transversalement à une direction de transport (T) du convoyeur (11) pour ressortir dans le flux de récipients (3) dans la position de blocage.

9. Dispositif de transport (10) selon l'une des revendications 1 à 7, dans lequel ledit au moins un élément de blocage contrôlable (13.1, 13.2) est conçu sous la forme de deux éléments de blocage contrôlables (13.1, 13.2) qui sont agencés latéralement sur la voie (G) de manière à être réglables transversalement à une direction de transport (T) du convoyeur (11) dans des directions opposées pour ressortir dans le flux de récipients (3) dans la position de blocage.

10. Procédé de transport de récipients (2),
dans lequel les récipients (2) sont transportés debout par un convoyeur (11) sous forme d'un flux de récipients (3), dans lequel le flux de récipients (3) est guidé dans une voie (G) par au moins un élément de guidage (12) associé au convoyeur (11), dans lequel le transport dans la voie (G) est sélectivement libéré dans une position normale ou bloqué dans une position de blocage par au moins un élément de blocage contrôlable (13.1, 13.2) d'un dispositif de blocage de voie (13),
dans lequel le convoyeur (11) comprend au moins une bande transporteuse pour transporter les récipients et les récipients sont transportés par ladite au moins une bande transporteuse,
**caractérisé en ce que** ledit au moins un élément de blocage contrôlable (13) est réglé entre la position normale et la position de blocage à l'aide d'un élément musculaire électrique (14).

11. Procédé de transport selon la revendication 10, dans lequel un élément polymère électroactif (15) est activé lorsque l'élément musculaire électrique (14) est réglé.

12. Procédé de transport selon la revendication 10 ou 11, dans lequel ledit au moins un élément de blocage contrôlable (13.1, 13.2) est réglé transversalement à une direction de transport (T) de manière à ressortir dans le flux de récipients (3) dans la position de blocage.

13. Procédé de transport selon la revendication 10 ou 11, dans lequel deux éléments de blocage contrôlables (13.1, 13.2) sont réglés transversalement à une direction de transport (T) du convoyeur (11) dans des directions opposées pour ressortir dans le flux de récipients (3) dans la position de blocage.
